# EUROPEAN PATENT SPECIFICATION

(11) **EP 1 144 212 B1**
(45) Date of publication and mention of the grant of the patent: **07.07.2004**
(21) Application number: 99965687.9
(22) Date of filing: 23.12.1999
(51) Int. Cl.: B60G 3/18, B60K 7/00, B62D 5/04

(54) **WHEEL SUSPENSION ARRANGEMENT IN A VEHICLE**
RADAUFHÄNGUNGSANORDNUNG BEI EINEM FAHRZEUG
DISPOSITIF DE SUSPENSION DES ROUES D'UN VEHICULE AUTOMOBILE

(30) Priority: 29.12.1998 SE 9804592
(43) Date of publication of application: 17.10.2001
(73) Proprietor: Volvo Personvagnar AB, 405 31 Göteborg (SE)
(72) Inventor: ZETTERSTRÖM, Sigvard, S-471 71 Hakenäset (SE)
(74) Representative: Andersson, Per Rune
(86) International application number: PCT/SE1999/002476
(87) International publication number: WO 2000/038939

(56) References cited:
- EP-A1- 0 340 823
- US-A- 5 087 229
- US-A- 5 150 763

## Description

### TECHNICAL FIELD

The present invention relates to a vehicular wheel suspension arrangement in accordance with the preamble of claim 1. The invention is in particular intended for use as an integrated wheel suspension unit for steering, propulsion and braking of the respective wheel of an automotive vehicle.

### BACKGROUND ART

In association with vehicles, e.g. passenger cars, various types of suspension systems are used today for the vehicle wheels and wheel axles. Such wheel suspensions are, in a known manner, arranged for allowing attachment and resilient suspension of the vehicle wheels, in turn aiming at good comfort for the vehicle passengers and enhancing the road holding properties and the service life of the vehicle.

A multitude of different types of wheel suspension are previously known, and comprised in systems with e.g. rigid or split wheel axles, which may, according to requirement, be supplemented by spring members, shock absorbers and other components. Besides that, force-absorbing link arms connecting the vehicle wheels to its body, and anti-roll bars for reduction of excessive rolling motions of the vehicle, are often utilised.

Further, today's vehicles are normally often designed such that the vehicle motive wheel axles are connected to an engine, for example consisting of a conventional combustion engine of the Otto or Diesel type. The connection between the wheel axles and the engine is then arranged via a gearbox and mechanical transmission devices. Furthermore, the vehicle wheels are provided with braking devices, such as conventional disc or drum brakes, actuated in a known manner by depression of the vehicle brake pedal. In this way, the brake devices at the wheels are actuated via a hydraulic brake line system.

Also, today's vehides are normally provided with a steering device intended for giving the wheels a certain angular steering displacement when the driver is turning the vehicle steering-wheel. A known type of steering gear comprises an input shaft, to which the steering-wheel is connected, said shaft transmitting the steering-wheel movements to a pinion that in turn is connected to a rack. The rack movements are in turn transferred to the vehicle wheels, for steering the vehicle. Such a known steering gear may be complemented by a servo power device, comprising a hydraulic cylinder with a piston arranged on the steering rack. In this way, more power may be appfied onto the rack when turning the steering-wheel.

The equipment described above for propulsion, wheel suspension, braking and steering is based on well-proved principles that are frequently used today in automotive vehicle design. Although these principles define a well functioning technique, they exhibit certain limitations. For example, it may constitute a problem that all the components mentioned above (i.e. engine, gearbox, transmission, spring arrangement, anti-roll bars, brakes, steering, etc.) have to be fitted into a relatively small space in the vehicle. Furthermore, there may be a difficulty in interconnecting, in a cost-effective and secure manner, a large number of functions associated with a wheel suspension system. Especially, there may exist, in. some cases, a requirement for a high degree of integration of vehicle functions for suspension and propulsion of the respective wheel.

The document US 5150763 A shows a wheel with a built in electrical motor, and the document US 5087229 A shows a vehicle wheel with a built in electrical motor and a braking device.

The document EP 0340823 A1, which comprises the features mentioned in the preamble of claim 1, discloses an arrangement for suspension and steering of two wheels in a vehicle, wherein the two wheels are connected to the body of the vehicle by means of two link arms.

### DISCLOSURE OF INVENTION

The object of the present invention is to provide an improved vehicular wheel suspension arrangement, which could in particular be utilised as an integrated wheel suspension unit with functions primarily for steering, and preferably also for propulsion and braking, of each individual vehicle wheel: This is achieved by means of an arrangement, the characteristics of which are disclosed in the accompanying claim 1.

Through the invention, a number of advantages are achieved compared to conventional wheel suspension systems. Primarily it should be noted that the invention constitutes a highly integrated wheel suspension arrangement, allowing individual adjustment of steering displacement and wheel alignment of the respective wheels of a vehicle. In this way, an individual steering of each wheel of the vehide in question is allowed. Furthermore, a vehicle comprising the arrangement according to the invention can be designed without any conventional steering gear and/or steering column.

The invention is preferably arranged in connection with a computer-based control unit provided with software functions for dynamic adjustment of wheel alignment, in particular the so-called "camber" angle and the so-called "toe-in" angle of the respective wheel. In this manner a vehicle constructed according to the invention can be designed without any conventional mechanical wheel alignment possibilities.

Furthermore, a vehicle equipped with the arrangement according to the invention may comprise a control device of the "joystick" type or similar, replacing a conventional steering-wheel.

According to a preferred embodiment, the invention includes a propulsion device in the form of an electric motor, integrally arranged in the individual wheel. Through this, the vehicle in question can be designed without a conventional combustion engine, as well as without a conventional gearbox or any drive shaft connecting the individual wheel with a propulsion device fitted on the chassis of the vehicle. Nor do any mechanical connections have to be fitted at the factory, which in turn creates prerequisites for a simple and cost-effective production.

According to the preferred embodiment, a braking device is provided, which is integrated into said electrical motor. In this manner, a vehicle comprising the arrangement according to the invention will not require any conventional drum or disc brake arrangement.

According to the embodiment there is, besides this, a further link arm connected between the respective wheel and the vehicle body, said link arm being provided with a torsion spring unit for controlling a level adjustment of the wheel and for an anti-roll function of the wheel. In this way an advantage is achieved, as the vehicle does not require the provision of any conventional, mechanical anti-roll bar.

Advantageous embodiments of the invention are characterised in the subsequent dependent daims.

### DESCRIPTION OF DRAWINGS

The invention will be described in further detail below, with reference to a preferred embodiment example and the appended drawings, in which:
- Fig. 1: shows a principle side view, in partial cross-section, of an arrangement according to the present invention,
- Fig. 2: shows a perspective view of how the arrangement according to the invention could be arranged in practice on a vehicle, and
- Fig. 3: shows the structure of the invention in the form of a block diagram.

### PREFERRED EMBODIMENT

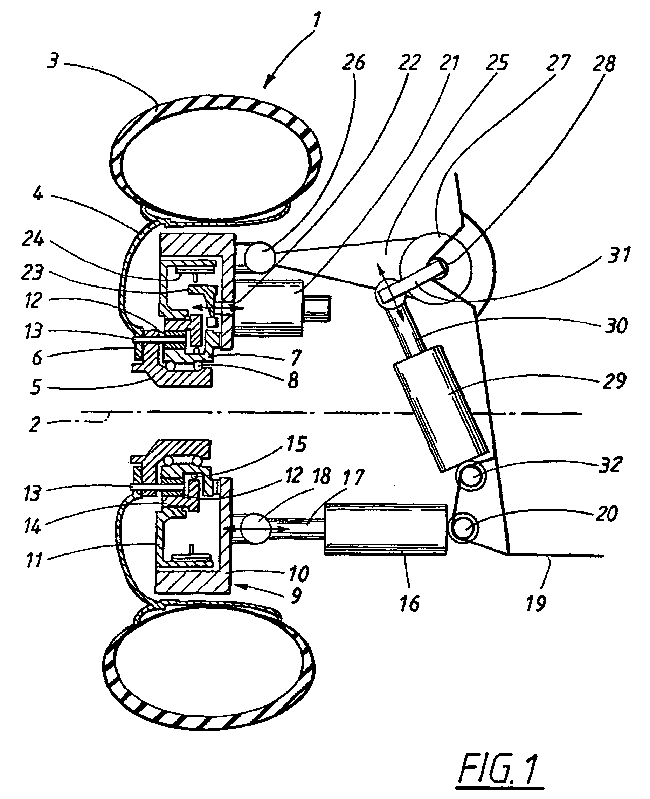

Fig. 1 shows a side view, in partial cross-section, of an arrangement according to the present invention. According to a preferred embodiment, the arrangement is utilised as a wheel suspension unit for an automotive vehicle, which may preferably, but not necessarily, consist of a passenger car. The figure shows, in principle, how this wheel suspension unit according to the invention could be arranged at one of the four wheels of such a vehicle. Corresponding wheel suspension units would then preferably be provided for all wheels of the vehide in question.

According to what can be gathered from Fig. 1, the wheel 1 in question is, in a conventional manner, arranged for rotation about an imaginary axis 2, and comprises a tire 3 and a hub 4. The hub is rotationally suspended by means of a wheel bearing comprising an inner ring 5, which in turn is connected to the hub 4 via a flange 6, extending radially in relation to said axis 2. In a manner as such known, a number of (not shown) wheel studs may be inserted through the flange 6 and be screwed tight into corresponding (not shown) holes in a surface of the inner ring 5, facing the flange 6. To this end, the flange 6 of the hub 4 is provided with (not shown) threaded holes for such wheel studs.

The wheel bearing mentioned above also comprises an outer ring 7 extending around the inner ring 5, and bearing balls 8 arranged between the inner ring 5 and the outer ring 7.

According to the embodiment, the invention comprises a propulsion device integrated into the wheel 1, preferably consisting of an electric motor 9. The motor 9 in turn comprises an armature 10, provided with (not shown) motor coils, and fixedly attached to the outer ring 7. The motor 9 further comprises a rotor 11, enclosed by the armature 10. The rotor 11 functions to rotate in relation to the outer ring 7 of the wheel bearing, the outer ring 7 thereby being stationary. To this end, the outer ring 7 is designed like an annular sun gear, more precisely having external teeth meshing with a multitude of planetary gears 12 arranged around the circumference of the outer ring 7. The number of planetary gears 12 is preferably three, of which two can be seen in Fig. 1.

Fig. 1 illustrates the invention in principle, and in a somewhat simplified form. In practice, the armature 10 should be connected to a separate component in the form of a (not shown) hub carrier, which would then be bolted to the armature 10.

The planetary gears 12 should be located around the outer ring 7 at substantially the same pitch diameter as the above-mentioned wheel studs. Furthermore, each planetary gear 12 is rotationally supported on a planet carrier stud 13 impacted into a hole in the hub flange 6. To this end, the inner ring 5 of the wheel bearing is provided with through holes for passage of the respective planet carrier stud 13.

The rotor 11 is connected to each planetary gear 12 via a ring gear 14. This ring gear 14 is provided with internal teeth for meshing with the corresponding teeth of the respective planetary gear 12, and is also provided with external splines for nonrotating connection with the rotor 11 by means of a press fit. The ring gear 14 is furthermore supported in relation to the outer ring 7 of the wheel bearing, more particularly against the outside of the outer ring 7. This is indicated in Fig. 1 by further bearing balls 15. Thus, the outer ring 7 of the wheel bearing defines an inner race for the ring gear 14 of the planetary gear transmission.

The armature 10 is connected to two steering link arms 16 (of which only one steering link arm is shown in Fig. 1). According to what will be described in detail below, the steering link arms 16 will thus define activation members functioning to provide dynamic wheel alignment adjustment of the wheel 1, in dependence of the current operating state of the vehicle and the wheel 1. Examples of wheel alignment angles that might be considered for adjustment, are the so-called "toe-in" angle, i.e. an angle between the longitudinal axis of the vehicle and an imaginary plane along the wheel 1, and the so-called "camber" angle, i.e. the angle of inclination of the wheel 1 in relation to an imaginary plane extending perpendicularly to an underlying roadway. Besides this, each steering link arm 16 is functioning to provide a dynamic adjustment of an angular steering displacement of the wheel 1, in dependence of the intentions of the driver during driving, and in dependence of the current operating state of the vehide and the wheel 1. For adjustment of the wheel 1, each steering link arm 16 is provided with a displaceable rod 17 that can be actuated to be extended out of, and withdrawn into, the respective steering link arm 16, which is indicated by an arrow in Fig. 1. The rod 17 is then actuated by a drive member, preferably in the form of an electrical axial motor, comprised as an integral component in each steering link arm 16 (and not shown in detail in Fig. 1). The rod 17 is rotationally connected to the armature 10 via a pivoting joint 18. Preferably, the attachment of the respective rod 17 is made by means of a rubber bush, as the angles concerned are normally relatively small. Alternatively, the attachment of the respective rod 17 could be made via a ball joint.

The electrical axial motor is a type of drive member known as such, and will not be described in detail here. According to what will be explained below, the respective axial motor can be actuated, for adjustment of the wheel alignment and the required steering displacement of each individual wheel, by means of a computer-based control unit.

Furthermore, each steering link arm 16 is fastened to the vehide chassis 19 via additional attachment points 20 (of which only one attachment point is shown in Fig. 1). Preferably, each attachment point 20 includes a rubber bush.

According to the embodiment, the arrangement according to the invention comprises a braking device in the form of a brake actuator 21, arranged at the armature 10. Also the brake actuator 21 preferably comprises an electrical, linear axial motor, which is functioning, upon actuation, to act upon a displaceable brake rod 22, which in turn abuts against a pivoting member 23 that is suspended in the armature 10. Upon actuation of the brake actuator 21, this member 23 will be caused by the brake rod 22 to pivot so as to force a brake shoe 24 against an internal cylindrical surface of the rotor 11. The brake shoe 24 is provided with a brake lining, manufactured from a material exhibiting a high friction against the interior surface of the rotor 11. Hereby a drum brake function is achieved, by the aid of which the rotor 11 can be braked. According to what will be explained below, this function may be actuated for example through depressing a brake pedal located in the vehicle.

During operation of the engine 9, i. e. for rotation of the wheel 1, the planetary gearing in the hub is used for increasing the rotational speed of the rotor 11 to about twice that of the wheel. In this way, the torque requirement during propulsion by the engine 9 can be reduced, which is an advantage. Hereby applies that the planetary gears 12 will roll against the stationary outer ring 7, and that the respective carrier studs 13 of the planetary gears 12 are arranged in the inner ring 5 of the bearing, which is then rotating at about half the speed of the rotor 11. Through the aid of the planetary gearing, only about half of the force of the stepped-up rotor 11 is required during propulsion or braking of the wheel 1, compared to if the rotor 11 had been fixedly arranged directly onto the hub of the wheel 1.

Further, according to the embodiment, the armature 10 is connected to a second link arm in the form of a level link arm 25 which, in a similar fashion as the steering link arms 16 mentioned above, is pivotally mounted to the armature 10 via a further attachment point 26 in the form of a rubber bush or, alternatively, a ball joint. The level link arm 25 is functioning to provide a level regulation and anti-roll function of the wheel 1. To this end, the level link arm 25 comprises an integral torsion spring unit 27, which in turn is arranged around a through axle 28, defining an attachment into the vehicle body 19, preferably extending substantially in the longitudinal direction of the vehicle. The torsion spring unit 27 is made of rubber or a material having similar resilient properties. The attachment to the body 19 is preferably realised through (not shown) rubber bushes, whereby the wheel 1 can be provided with a required rigidity in the transversal and longitudinal directions. This in turn entails good performance regarding sound and vibration insulation in the vehide.

Through a suitable adaptation of the material properties and the construction of the torsion spring unit 27, a level control of the wheel 1 is allowed, that is, a control of the setting of the vertical position of the wheel 1 in relation to the body 19. Furthermore, the level link arm 25 will function, with the aid of the torsion spring unit 27, like an anti-roll bar, used for the cushioning of excessively large rolling motions of the vehicle. In order to optimise the road-holding properties of a vehicle, the stiffness of the torsion spring unit 27 may for example be tuned to achieve a good anti-roll function.

In order to enable, in a simple and efficient manner, optimisation of the anti-roll function of the torsion spring unit 27 to a current operating state of the vehicle, said unit might be based on the use of an electro-rheological fluid. According to an as such known technique, such a fluid can be used in resilient elements, whereby a relatively high electrical tension is applied over a certain amount of electro-rheological fluid to influence its viscosity. In this way, the torsion spring unit 27 can be utilised for an electrically controlled, active cushioning.

In order to enhance further the level control function and the anti-roll function of the invention, the level link arm 25 is preferably connected to a control lever 29 including an additional (not shown) electrical axial motor. The control lever 29 includes a rod 30 that can be actuated by this axial motor for displacement back and forth, which is indicated by an arrow in Fig. 1. The rod 30 is pivotally suspended in a link rod 31, which in turn is fixedly attached to that shaft 28, by which the torsion spring unit 27 is fastened. Further, the control lever 29 is pivotally mounted to the vehicle body 19 via an additional pivoting joint 32. In this manner, the control lever 29 is arranged to be utilised for providing a certain preload to the torsion spring unit 27, which is provided by means of appropriate operation of the link rod 31. Through this, a variable level retention of each wheel 1 is enabled. Besides this, an active "anti-lift" and "anti-dive" function of the vehicle is enabled, i.e. the tendency of the vehicle body to lift at the rear and at the front, respectively, during braking and acceleration, respectively, can be efficiently counteracted. Furthermore, in this way rigidity against "rolling" motions of the vehide is achieved, i.e. tendencies of unwanted rotation around the longitudinal axis of the vehicle can be counteracted.

Thus, the torsion spring unit 27 is, according to the embodiment, provided with a variable preloading device. In case the torsion spring unit 27 consists of a rubber spring, this preloading device could for example comprise a (not shown) rotating inner sleeve. The level control is then achieved by rotation of the inner sleeve, whereby the force on the end of the link arm connected to the wheel 1 can be increased or decreased.

The level link arm 25 thus transfers a resilient force from the torsion spring unit 27, and also transfers an anti-roll force from the torsion spring unit 27 and its preloading device, which may take place dynamically, e.g. during curve driving. Furthermore, the level link arm 25 transfers a level-controlling force from the torsion spring unit 27 and its preloading device, which should best take place in connection with a load change of the vehicle.

According to what will be described in detail below, the arrangement according to the invention is provided with a number of sensors for various parameters defining the current operating state of the vehicle and its wheels, respectively. These sensors (not shown in Fig. 1) are used for control of the steering link arms 16, the level link arm 25 and the control lever 29.

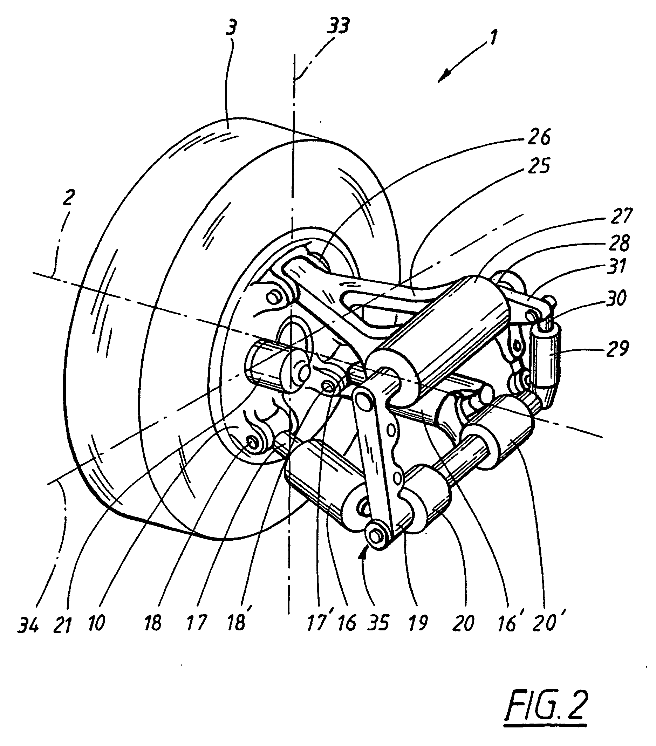

Fig. 2 illustrates, in a perspective view, how the arrangement according to the invention could be arranged in practice in a vehicle. From the figure can be gathered that the steering link arms 16, 16' are two in number and fastened to the body 19 through two rubber bushes 20, 20'. The steering link arms 16, 16' are substantially identical in shape and are, as discussed above, pivotally attached via rods 17, 17', respectively, to attachment points 18, 18' in the armature 10, arranged along substantially the same horizontal plane. More particularly, the steering link arms 16, 16' are attached on each side of an imaginary line 33 of vertical extension, running through the centre point of the wheel 1. The steering link arms 16, 16' are further attached below an imaginary horizontal line 34, running substantially in parallel with the underlying roadway and through the centre point of the wheel 1. The invention is however not delimited to this location of the steering link arms 16, 16', but alternatively, they may be attached above the horizontal line 34.

According to what can be seen in Fig. 2, the torsion spring unit 27 is further arranged around the axle 28, which is in turn affixed to the vehicle chassis 19, according to the explanation above. The link rod 31 is also fastened to the axle 28. The link rod 31 can thus be actuated by means of the control lever 29 and the associated rod 30 for control of the level-regulation and anti-roll functions of the torsion spring unit 27. Fig. 2 illustrates a practical embodiment in which the link rod is arranged extending in a direction away from the wheel 1, as an alternative to what is shown in Fig. 1, where the link rod 31 is shown extending in a direction towards the wheel 1. Thus, both of these alternatives are conceivable within the scope of the invention.

The attachment of the two steering link arms 16, 16', the level link arm 25 and the control lever 29 is made to the vehicle chassis 19, as discussed above. According to what is shown in Fig. 2, that part of the chassis 19 to which the attachment is made preferably consists of a frame-like member 35, serving as a dedicated attachment component, with the aid of which the assembly of the arrangement according to the invention onto a vehide is facilitated. Through the frame element 35, the retaining of the components in question as one single unit is also enabled. Furthermore, the frame element 35 makes it possible to reduce the requirements for accurate tolerances of the attachment points against the body.

Preferably, the two steering link arms 16, 16' are symmetrically arranged on the individual wheel of the vehicle in question. This allows for the use of identical wheel suspension units according to the invention in the respective comers of the vehicle.

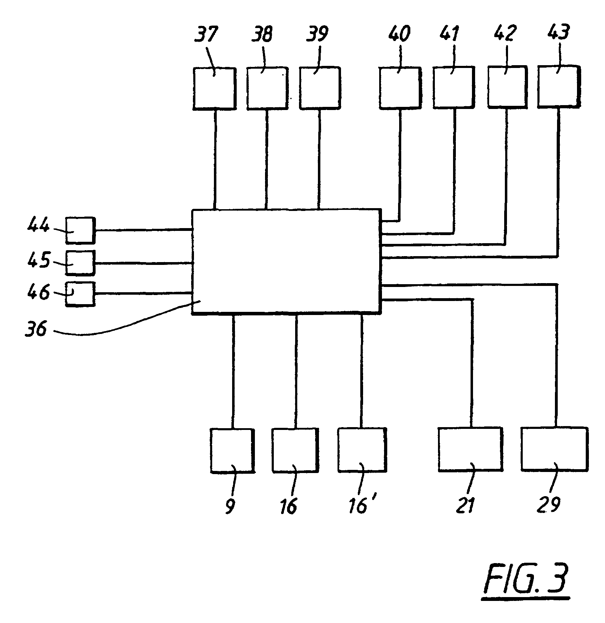

Fig. 3 shows, in principle and in the form of a block diagram, how the arrangement according to the invention could be arranged and utilised in a vehicle. Hereby, the arrangement is utilised as an integrated wheel suspension unit for electrical control of propulsion, angular alignment, steering and braking of each individual wheel of the vehicle. Preferably, four substantially identical wheel suspension units are used for the respective wheels of the vehicle. Each wheel may then be controlled independently of the others, regarding torque and wheel alignment.

The invention is based upon the two steering links 16, 16' being controlled by means of a computer-based control unit 36, which in an as such known manner is functioning to receive a number of signals from a corresponding number of sensors. According to the embodiment, the invention comprises a first sensor 37 for generating a signal corresponding to the driver's requirement regarding the angular steering displacement or the steering-wheel angle of the vehicle. Such a sensor 37 may be an integrated angle sensor in a conventional (not shown) steering-wheel, or alternatively be comprised as part of a "joystick" or similar steering control device. Irrespective of the embodiment used, a signal from this first sensor 37 corresponding to the driver's steering commands is fed to the control unit 36.

The first sensor 37 is preferably provided with a (not shown) unit for feedback of a force that provides a resistance or a movement of the steering control device, corresponding to the steering displacement of the vehicle wheels. As an example, such a feedback force might be provided by means of a (not shown) electrical motor arranged in the steering control device. In this way the driver will get the feeling of a mechanical connection between the steering-wheel and the wheels.

Further, there is a second sensor 38 in the form of a force sensor arranged in connection with each wheel of the arrangement according to the invention. This second sensor 38 is connected to the control unit 36, emitting a signal corresponding to a measurement of the force from the underlying roadway, acting on the respective wheel. Such a force sensor 38 would preferably be arranged as dose to each wheel as possible, and would for example consist of a strain gauge sensor fitted in the wheel bearing discussed above. Such a sensor can be used for detecting transversal forces acting on the wheel, allowing the rolling resistance to be minimised by an appropriate alignment setting of the wheel. Such a force sensor can also be used for detecting longitudinal forces acting upon the wheel, i.e. forces acting in the longitudinal direction of the vehide.

Furthermore, there is a third sensor 39 in the form of a position sensor arranged in connection to each wheel. This third sensor 39 emits, to the control unit 36, a signal corresponding to a measurement of the level of the wheel in relation to the body (i. e the vehide ground clearance). Such a sensor may also be utilised for detecting the roll angle of the vehide (that is, to what degree the vehide is rotating around its longitudinal axis). The suspension movement sensor 39 is preferably arranged between the upper link arm 25 and the body 19 (compare Fig. 1).

By means of the signals emitted from at least said first sensor 37, preferably also said second and third sensors 38, 39, to the control unit 36, an appropriate setting of steering displacement and wheel alignment of each wheel can be performed in response to the current operating conditions of the vehicle. For this purpose, the control unit 36 includes a data storage memory containing tables, which, in dependence of different input data from the first sensor 37, the second sensor 38 and the third sensor 39, calculates output values for control of the function of the steering link arms 16, 16'. For example, the signal from the first sensor 37 is utilised for the adjustment of a required angular steering displacement of each wheel.

The invention can be utilised for actively controlling the wheel alignment (e.g. the camber and toe-in angles) in order to optimise these in response to the operating conditions momentarily valid for the vehicle. For example, current transversal forces on the wheels, current wheel positions, and other operating parameters of the vehide, such as its current speed and fuel consumption, can then be considered. The invention can be used for providing optimum fuel economy, by continuously optimising the wheel alignment so as to minimise the rolling resistance of each wheel. The invention can also be used, e.g. by side wind against the vehicle, to counteract this influence with a wheel alignment adjustment and a steering displacement that is adapted to the least possible drag resistance, which will also positively influence the fuel consumption. In this case, the control unit 36 is utilised for aligning the wheels so as to minimise the transversal forces acting upon each individual wheel, said forces in turn being detected by means of said force sensors 38. Further, the transversal stability of the vehicle can be adapted through a continuous adjustment of the camber angle of each wheel. Such a function may for example be used by the driver, in order to select, by means of a suitable (not shown) control member, if an active or a more comfortable driving style is preferred. Depending on the driving style selected and fed to the control unit 36, the corresponding wheel settings can be performed. Furthermore, for continuous level regulation and control of the anti-roll function, a control of the above control levers 29 may be utilised.

Preferably, the system also comprises a fourth sensor 40 in the form of a brake sensor, preferably being arranged in connection with a brake pedal (not shown) in the vehicle. By means of signals from the brake sensor 40, the brake actuator 21 described above can be applied when the driver wishes to brake the vehicle. The invention can also be used for applying the wheel brakes by non-driver-induced braking actions, which may for example occur in case anti-spin and ABS functions are required in the vehicle. Preferably, the functions of the respective brake actuators 21 and the respective electrical motors 9 are co-ordinated during this type of control of propulsion and braking of the wheels.

Other kinds of sensors may be of interest for detecting the current driving conditions of the vehicle and its wheels. For example, a fifth sensor in the form of an accelerometer 41 may be used for feeding a signal corresponding to the current vehicle acceleration, to the control unit 36. Further, there is a sixth sensor 42, indicating a measurement of the driver's throttle actuation, connected to the control unit 36, for controlling the torque of the individual electrical motors.

According to what has been discussed above, the invention is functioning to control the wheel alignment and angular steering displacement of the individual wheels. Furthermore, the control unit 36 is functioning, in response for example to a measurement of the driver's throttle actuation, which could be detected by the above sixth sensor 42 consisting of a position sensor for a throttle pedal, to control the motor in each individual wheel so as to obtain an intended velocity of the vehicle. This type of control will not be described in detail here. It should however be noted that the brake arrangement is preferably functioning in such a way that regenerative braking by means of the respective electrical motor is performed as a first step, before friction braking, via the brake shoe 24, is initiated.

Besides the above, a seventh sensor 43, transmitting a measurement of the rotational speed of each wheel, may be connected to the control unit 36. In this manner, the invention can be used (particularly at high vehicle speeds) for optimisation of the wheel alignment, in order thus to provide a high degree of stabilisation of the vehicle. This seventh sensor 43 may be used for calculation of the vehicle speed and the rotational changes of the individual wheels. Based upon signals from the seventh sensor 43, for example, a driving or a braking force may be applied to an individual wheel, in case an anti-spin and ABS function is required. Furthermore, such signals can be used for registering the road friction during slippery conditions.

With the intention of enabling an exact control of the steering link arms 16, 16', these components are preferably each provided with a position sensor 44 and 45, respectively, transmitting signals to the control unit 36 corresponding to a measurement of the position of each rod 17, 17' of the steering link arms 16, 16', respectively, i.e. a measurement defining how far each rod 17, 17' has been extended out of its associated steering link arm 16, 16'. Preferably, the control lever 29 is also provided with a corresponding position detector 46, which, in a similar manner, sends a signal to the control unit 36 corresponding to a measurement of the current position of the rod 30 associated with the control lever 29.

Further (not shown) sensors may also be utilised in connection with the invention. For example, transversal accelerometers (at the front and rear of the body) can be used for detecting the momentary transversal acceleration of the vehicle. Furthermore, a yaw angle sensor may be used for detecting the vehide body rotational movement as seen from above, i.e. for detecting any skidding tendencies of the vehicle. Further yet, air speed sensors may be used at the front comers of the vehicle, for indicating air drag and wind direction. Signals from such sensors could then be used for controlling the alignment of the individual wheels of the vehicle in a suitable way during travel, so as to achieve minimum drag.

Consequently, the invention can be used for individual settings of angular steering displacement and wheel alignment for each wheel of a vehicle. In the following, it will be explained how the invention can be used during a number of typical operating conditions of a vehicle.

The camber angle of the respective wheel influences the transversal stability of the vehicle. In order to set a suitable camber angle of a given wheel, a set point for this angle may be calculated using the level positions at the right and left hand sides, respectively, of the vehicle. Hereby, a signal from the first sensor 37, indicating the steering displacement of the vehicle steering-wheel, and a signal from the second sensor 38, indicating the transversal force acting on the wheels, are also considered. Preferably, a signal indicative of the transversal acceleration acting on the body is also utilised. If, for example, the elevation is the same for the right and the left hand sides of the vehicle, if the selected steering-wheel position corresponds to driving straight ahead, and if the transversal forces on the wheels and the transversal acceleration is substantially zero, one can assume that the vehide in question is driven straight ahead, without any inclination in relation to the horizontal plane. If this is the case, the steering link arms 16, 16' can be adjusted to make the camber angle for each wheel somewhat negative, resulting in good vehicle transversal stability. By a negative camber angle is meant that the top of the wheel is somewhat inclined towards the vehicle.

As the wheel moves resiliently in and out over road obstacles, without any turning of the steering-wheel and transversal acceleration occurring that affects the vehicle, the steering link arms 16, 16' do not have to be activated for adjustment of the wheel camber angles. If, on the other hand, the elevation is different for the right and the left hand side vehide wheels, at the same time as the steering-wheel is turned and the vehicle is subjected to transversal acceleration, which would correspond to the car entering a curve, then the camber angle is preferably adjusted so as to place the wheel theoretically vertical relative to the roadway.

Besides this, the toe-in angle of each wheel can be adjusted with the aid of a measurement of the transversal forces on the wheel, according to what is being detected by the above-mentioned second sensor 38. Hereby is considered the fact that the transversal wheel forces should be minimised in order to achieve the lowest possible rolling resistance. Preferably, signals from the first sensor 37, the yaw angle sensor and the transversal accelerometers would also be utilised during this kind of adjustment

Furthermore, the invention can be used to make the vehicle run levelly during curve negotiation. In this case, the steering-wheel angle sensor 37, the level sensor 39 and preferably a speed sensor for each wheel is utilised. During this operating state, the control unit 36 is used for calculation of to what degree the control lever 29 should be activated for preloading the torsion spring unit 27 in order to make the car run substantially levelly when driving through a curve.

When driving with a side wind against the vehicle body, the invention can be used for counteracting the force acting upon the vehicle. In a strong side wind, a state exists where the force sensors 38 at the wheels are affected without the body being influenced by any transversal acceleration, whilst the steering-wheel is in a position corresponding to driving straight ahead. As long as such a transversal force exists, the respective steering link arms 16, 16' are controlled in such a way that the wheels at the front and rear are steering so as to make the car still run straight ahead, but slightly diagonally (so-called "dog walk"), i.e. the body is turned somewhat into the wind. By for example side wind changes, gusts of wind and during overtaking, which quickly changes the incoming force of the side wind, the wheel force sensors, the body yaw angle sensor and the transversal accelerometers will respond. The control unit may then be functioning to initiate a quick counter-steering of the wheels, to minimise yaw and drift.

During special operating conditions, such as parking, the invention could be used for four-wheel steering, facilitating the manoeuvring of the vehicle. Four-wheel steering can be used for decreasing the turning circle of the vehicle as well as for enhancing its high-speed stability. For example, a diagonal movement away from, and in towards, a kerb could be performed in connection with a parking manoeuvre.

According to the invention, four-wheel steering can be activated automatically if required, preferably during driving the vehicle at a speed below a certain limit (detectable through the wheel rotational speed sensor 43). When driving at relatively high speeds, the invention can also be used for steering the rear wheels somewhat, thus contributing to a high stability of the vehicle.

Another example of an application of the invention is the case where the vehide in question is heavily loaded, and there are requirements for adapting the height level of the chassis above the roadway, in response to the weight of the load. This level adaptation could then be performed through appropriate control of the control levers 29 mentioned above.

The invention is not limited by the embodiment described above, but may be varied within the scope of the appended claims. For example, the invention could in principle be realised using a conventional engine, e.g. a combustion engine provided in the vehide chassis and being connected to the vehicle drive wheels via a conventional mechanical connection. Further, in principle, a conventional braking device could be utilised as an alternative to the above-mentioned electrical brake. Further, the invention can be utilised in various types of vehicles, such as passenger cars, trucks and buses.

The invention in its simplest form can be implemented with the two steering link arms 16, 16', which are then arranged as discussed above, that is, fitted between the vehicle body and attachment points at each wheel, located on both sides of an imaginary vertical line running through the centre of the wheel. The minimum number of sensors that can be used to realise the invention, is in this case a sensor for the steering-wheel angular displacement required by the driver. Preferably, the above-mentioned position sensors 44, 45 for sensing the positions of the rods 17, 17', respectively, of the two steering link arms 16, 16,' would also be used. Such an arrangement would allow control of the angular steering displacement and the wheel alignment, e.g. the camber angle, of each individual wheel.

In principle, the electrical devices for propulsion and braking could be replaced, completely or in part, by hydraulic power transmission devices (steering link arms, spring, level control, anti-roll and shock-absorber elements and wheel motors), without departing from the basic principle of the invention. For example, the electrical axial motors mentioned above could be replaced by hydraulic cylinders. In the case of electrical actuators being used, these should be made self-braking in order to absorb transversal forces acting on the wheels during driving.

In case the electrical propulsion is replaced by hydraulic propulsion, the function of the planetary gear arrangement would best be reversed in comparison to what has been described above. In this alternative embodiment, hydraulic motors would be connected to the planetary gears, doubling the rotational speed of the car wheels. With hydraulic propulsion, a number of components such as hydraulic pumps, valves and lines would also be added. The friction brake mentioned above would however be eliminated, as the hydraulic motors could be shut off completely, if required, so as to lock the wheels into a stationary position.

The above-mentioned braking arrangement could be realised in various ways. As an example, the brake lining could be arranged to act on the exterior of the rotor instead of its interior (as discussed above). One advantage of this arrangement would be that excess frictional heat generation is avoided in that portion of the rotor acting as a motor. Alternatively, the rotor might also be arranged so as to enclose the armature, i.e. such that the rotor would rotate dosest to the wheel rim, which would increase the possibilities for efficient cooling of the motor.

The torsion spring unit 27 may be based on e.g. a rubber spring or a steel spring.

According to a further alternative embodiment, the comfort properties of the vehicle in question can be enhanced by interconnecting the two steering link arms in such a way that the will follow each other in the vertical direction but will be substantially independent of each other in the horizontal direction.

Furthermore, the spring rate of the torsion spring unit could be made progressive, rendering increased spring hardness to a relatively heavily loaded vehicle.

According to a further alternative embodiment, the level link arm could be provided at an extended portion of the armature 10, a so-called "swan neck", placing the top attachment point of the level link arm at a point above the tire. This would provide a longer leverage for absorbing transversal forces on the wheel.

A parking brake function could further be obtained through an activation of the electrical brakes, conceivably in combination with placing all the wheels at an angle relative to each other, that is in a "stemming position". This would make the vehicle difficult to roll and to tow away.

The torsion spring unit could alternatively be of the hydro-pneumatic type, allowing also for anti-roll and level control functions.

## Claims

1. An arrangement for the suspension of a wheel (1) of an automotive vehicle, said wheel (1) being connected to a propulsion device (9) for driving the vehicle, and to a braking device (21) for braking each individual wheel (1), comprising:
sensors (37, 38, 39) for detecting at least the angular steering displacement of the vehicle required by the vehicle driver, two steering link arms (16, 16') fitted between said body (19) and attachment points (17, 17') in said wheel (1), positioned on both sides of an imaginary vertical line (33) running through the centre of the wheel (1), and
a control unit (36) for processing signals from said sensors (37. 38, 39) and for actuating said steering link arms (16, 16') for adjustment of said wheel (1) in response to said signals and the current operating state of the vehicle, **characterised by** each steering link arm (16, 16') comprising an electrically actuated axial motor, including a displaceable rod (18) connected to said wheel (1).

2. The arrangement according to claim 1, **characterised by** said propulsion device (9) consisting of an electrical motor arranged in association with said wheel (1).

3. The arrangement according to claim 2, **characterised by** said braking device (21) being integrated into said electrical motor (9).

4. The arrangement according to claim 3, **characterised by** comprising an additional sensor (40) indicating a degree of application of said braking device (21), required by the vehicle driver.

5. An arrangement according to any one of the preceding claims, **characterised by** comprising additional sensors (38, 39) for detecting the force acting upon each wheel (1) and for detecting the level of the wheel (1) in relation to the vehicle body (1).

6. An arrangement according to any one of the preceding claims, **characterised by** comprising a further link arm (25), fitted between said wheel (1) and another attachment point (28) on the body (19), said link arm (25) being provided with a torsion spring unit (27), for control of a level setting of the wheel and for an anti-roll function of the wheel (1).

7. The arrangement according to claim 6, **characterised by** said torsion spring unit (27) comprising an electro-rheological fluid, for active control of the spring force with which said link arm (25) acts upon the wheel (1).

8. An arrangement according to any one of claims 6 or 7, **characterised by** comprising a control lever (29) connected between said body (19) and said further link arm (25), said control lever (29) being operable for preloading the spring force of said further link arm (25).

9. A vehicle comprising an arrangement according to any one of the preceding claims.

## Patentansprüche

1. Anordnung einer Radaufhängung (1) bei einem Kraftfahrzeug, wobei das Rad (1) mit einer Antriebsvorrichtung (9) für den Antrieb des Fahrzeugs und einer Bremsvorrichtung (21) zum Abbremsen jedes einzelnen Rades (1) ausgestattet ist und sich diese Anordnung zusammensetzt aus:
Sensoren (37, 38, 39) für das Erfassen des vom Fahrzeugführer auszuführenden Lenkeinschlags, zwei Spurstangenhebet (16, 16'), die zwischen dem Fahrwerk (19) und den Befestigungspunkten (17, 17') in dem Rad, jeweils auf beiden Seiten einer gedachten, durch die Mitte des Rads (1) verlaufenden senkrechten Linie (33) angebracht sind,
eine Steuereinheit (36) zur Verarbeitung der von den Sensoren (37, 38, 39) kommenden Signale und zur Betätigung der Spurstangenhebel (16, 16') zum Zwecke der Einstellung des Rads (1) in Reaktion auf die Signale und den aktuellen Betriebszustand des Fahrzeugs,
**dadurch gekennzeichnet, dass** zu jedem Spurstangenhebel (16, 16') ein elektrisch betriebener Achsmotor und ein mit dem Rad (1) verbundenes, verschiebbar gelagertes Gestänge (18) gehören.

2. Anordnung nach Anspruch 1 **dadurch gekennzeichnet, dass** die Antriebsvorrichtung (9) mit einem Elektromotor ausgestattet ist, der mit dem Rad (1) verbunden ist.

3. Anordnung nach Anspruch 2 **dadurch gekennzeichnet, dass** die Bremsvorrichtung (21) in den Elektromotor (9) integriert ist.

4. Anordnung nach Anspruch 3 **dadurch gekennzeichnet, dass** ein zusätzlicher Sensor (40) dem Fahrzeugführer anzeigt, wie stark die Bremsvorrichtung (21) zu betätigen ist.

5. Anordnung nach einem der vorangegangenen Ansprüche **dadurch gekennzeichnet, dass** zusätzliche Sensoren (38, 39) die auf jedes Rad (1) wirkende Kraft und die vertikale Ausrichtung des Rades (1) in Bezug auf das Fahrwerk erfassen.

6. Anordnung nach einem der vorangegangenen Ansprüche **dadurch gekennzeichnet, dass** sich zwischen dem Rad (1) und einem weiteren Befestigungspunkt (28) am Fahrwerk (19) ein weiteres Gestänge (25) befindet, welches mit einer Drehstabfedervorrichtung (27) versehen ist, die der Steuerung der vertikalen Radausrichtung dient und für das Rad (1) eine Querstabilisatorfunktion erfüllt.

7. Anordnung nach Anspruch 6 **dadurch gekennzeichnet, dass** die Drehstabfeder (27) eine elektro-rheologische Flüssigkeit enthält, um die Federkraft, mit der das Gestänge (25) auf das Rad (1) wirkt, aktiv zu beeinflussen.

8. Anordnung nach einem der Ansprüche 6 oder 7 **dadurch gekennzeichnet, dass** ein Stellhebel (29) zwischen dem Befestigungspunkt am Fahrwerk (19) und dem zusätzlichen Gestänge (25) angeordnet ist, wobei der Stellhebel (29) zum Vorspannen der Feder des zusätzlichen Gestänges (25) betätigt werden kann.

9. Ein Fahrzeug mit einer Anordnung nach einem der vorangegangenen Ansprüche.

## Revendications

1. Agencement pour la suspension d'une roue (1) d'un véhicule automobile, ladite roue (1) étant reliée à un appareil de propulsion (9) pour entraîner le véhicule, et à un dispositif de freinage (21) pour freiner chaque roue individuelle (1), comprenant :
des capteurs (37, 38, 39) pour détecter au moins le déplacement de direction angulaire du véhicule requis par le conducteur du véhicule, deux bras de direction (16, 16') montés entre ledit corps (19) et des points d'attache (17, 17') dans ladite roue (1), positionnés des deux côtés d'une ligne verticale imaginaire (33) passant par le centre de la roue (1), et
une unité de commande (36) pour traiter des signaux provenant desdits capteurs (37, 38, 39) et pour actionner lesdits bras de direction (16, 16') pour l'ajustement de ladite roue (1) en réponse auxdits signaux et à l'état de fonctionnement actuel du véhicule,
**caractérisé en ce que** chaque bras de direction (16, 16') comprend un moteur axial à actionnement électrique, incluant une barre déplaçable (18) reliée à ladite roue (1).

2. Agencement selon la revendication 1, **caractérisé en ce que** ledit dispositif de propulsion (9) comprend un moteur électrique agencé en association avec ladite roue (1).

3. Agencement selon la revendication 2, **caractérisé en ce que** ledit dispositif de freinage (21) est intégré dans ledit moteur électrique (9).

4. Agencement selon la revendication 3, **caractérisé en ce qu'**il comprend un capteur additionnel (40) indiquant un degré d'application dudit dispositif de freinage (21), requis par le conducteur du véhicule.

5. Agencement selon l'une quelconque des revendications précédentes, **caractérisé en ce qu'**il comprend des capteurs additionnels (38, 39) pour détecter la force agissant sur chaque roue (1) et pour détecter le niveau de la roue (1) en relation avec la carrosserie du véhicule (1).

6. Agencement selon l'une quelconque des revendications précédentes, **caractérisé en ce qu'**il comprend un autre bras (25) monté entre ladite roue (1) et un autre point d'attache (28) sur la carrosserie (19), ledit bras (25) étant pourvu d'une unité à ressort de torsion (27) pour commander un réglage de niveau de la roue, et pour une fonction antiroulis de la roue (1).

7. Agencement selon la revendication 6, **caractérisé en ce que** ladite unité à ressort de torsion (27) comprend un fluide électro-rhéologique, pour une commande active de la force élastique avec laquelle ledit bras (25) agit sur la roue (1).

8. Agencement selon l'une ou l'autre des revendications 6 et 7, **caractérisé en ce qu'**il comprend un levier de commande (29) relié entre ladite carrosserie (19) et ledit autre bras (25), ledit levier de commande (29) étant capable de fonctionner pour assurer une précharge de la force élastique dudit autre bras (25).

9. Véhicule comprenant un agencement selon l'une quelconque des revendications précédentes.
